# EUROPEAN PATENT SPECIFICATION

(11) **EP 0 792 200 B1**
(45) Date of publication and mention of the grant of the patent: **15.03.2000**
(21) Application number: 95933690.0
(22) Date of filing: 22.09.1995
(51) Int. Cl.: B23B 5/12, B23B 27/16

(54) **CUTTING INSERT AND CUTTING TOOL FOR A PEELING OPERATION**
SCHNEIDEINSATZ UND SCHNEIDWERKZEUG FÜR EINEN SCHÄLVORGANG
PLAQUETTE DE DECOUPE ET INSTRUMENT DE COUPE DESTINE A L'ECROUTAGE

(30) Priority: 28.09.1994 SE 9403258
(43) Date of publication of application: 03.09.1997
(73) Proprietor: SANDVIK AKTIEBOLAG, 811 81 Sandviken (SE)
(72) Inventor: Hansson, Sölve, 811 60 Sandviken (SE); Schreiber, Ronald, 811 32 Sandviken (SE)
(74) Representative: Taquist, Lennart
(86) International application number: SE9501085
(87) International publication number: WO9609908

(56) References cited:
- EP-A- 0 160 850
- EP-A- 0 502 834
- DE-A- 3 303 263
- FR-A- 2 323 474
- SE-B- 444 899
- SE-C- 500 310
- US-A- 4 273 479
- DERWENT'S ABSTRACT, No. 84-112927/18, Week 8418; & SU,A,1 033 266 (CHERNAVSKII F G), 7 August 1983.
- DERWENT'S ABSTRACT, No. N3413D/52, Week 8152; & SU,A,814 573 (YAROSL POLY), 23 March 1981.

## Description

The present invention relates to a cutting insert according to the preamble of claim 1 and as known from DE-A-3 303 263. It relates furthermore to a cutting tool for a bar peeling operation performed in stainless steel or other heat resistant materials having an insert according to claim 1.

Bar peeling as a metalworking operation means that a bar is axially displaced through a rotary cutter head, the cutter head of which is provided with several distantly around the periphery arranged tools which remove from the bar a thin layer of millscale, surface cracks, etc., that results from the hot rolling of such bars, or tubes. In order to achieve the best results regarding tolerances and surface finish, two different types of inserts are usually combined in the same holder. DE-3540665 discloses such tools equipped with a round roughing insert and a finishing insert usually having straight edges. EP-A-131 784 discloses a bar peeling tool with an insert having angularly broken edges. Such inserts, however, have somewhat limited utility because they do not enable desired results to be achieved in terms of tolerances and surface finish when large feeds are involved.

DE-A-3303263 discloses a cutting insert having nine corners and three straight cutting edges between each pair of cutting corners. While such insert might be usable in a bar peeling tool it does not enable same type of insert to be used in different holders which are intended for cutting quite different depths of cut.

In view thereof, it is a purpose of this invention to provide a new type of insert and a tool will satisfy close tolerance demands and enable very good surface finish to be achieved at the same time as the tool becomes more economic due to the usage of only one type of insert.

It is another purpose of the invention to provide an insert with an extended lifetime.

It is yet another purpose of the invention to provide an insert which can more efficiently reduce and counter the tendency for vibrations to occur during a metal cutting operation.

The invention will become apparent from the following detailed description of a preferred embodiment thereof in connection with the accompanying drawings.
Fig. 1 is a perspective view of an insert for bar peeling of the invention;
Fig. 2 is a side view of a tool holder equipped with an insert according to the invention; and
Fig. 3 is a side view of the tool holder and the insert of the invention.

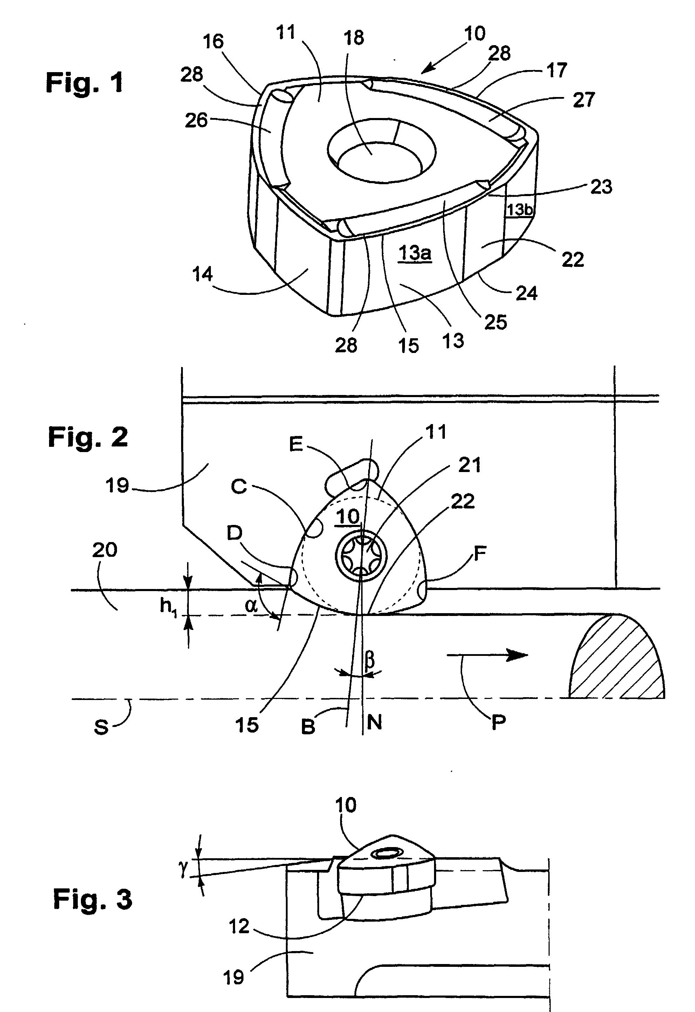

An insert according to the invention is shown in Fig. 1 which comprises a polygonal body 10 which includes an upper chip face 11, an opposite bottom face 12 that is parallel with the chip face 11, and clearance edge surfaces located between the faces 11, 12, two of which are visible in Fig. 1. The intersection lines between chip face 11 and said edge surfaces represent cutting edges 15, 16, 17. The edge clearance faces are oriented substantially perpendicularly in relation to chip face 11 and bottom face 12. The insert body has a central aperture 18 which extends entirely through the insert body to receive a suitable clamping screw or lever arm of an associated tool holder 19.

In accordance with the invention the insert has three edge surfaces which are convexly curved two such surfaces 13 and 14 being visible in Fig. 1, said surfaces intersecting with the chip face 11 to provide convex cutting edges 15 and 16 respectively. With the tool -holder 19 shown in Fig. 2 the active edge that is engaged with the workpiece 20 is designated 15. Although the insert body 10 in this embodiment is provided with a central aperture 18 for the receipt of a central locking screw 21 it is to be understood that such insert could alternatively be solid and clamped into its holder 19 by means of a clamp body that is urged against the chip face of such insert body. The curvature of the convex cutting edges 15, 16 is such that the edges are tangentially provided in regard of an imaginary circle C inscribed in said insert. The two edges 15, 16 meet at a corner D at an angle α of 120-140°. It is also characteristic that the bisector B in the radially innermost corner E is forming an acute angle β with a normal N which extends through same corner E whilst at the same time forming a right angle with the central line S of symmetry of the workpiece 20 which in this case is a cylindrical bar with which the insert 10 engages for metal cutting at cutting depth h₁. The tool holder is intended to do active work whilst simultaneously feeding the workpiece 20 forward in direction of arrow P. As a result of simultaneous turning of said workpiece a chip is peeled off from said workpiece whereby the main cutting edge 15 is active during said working.

It is especially characteristic that the curved edge surface is curved with a unitary radius and can be characterized as composed of two curved edge surfaces which are separated by a flat surface portion 22 with straight edges 23, 24 at the intersection between the upper surface 11 and the lower surface 12. This surface 22 is intended to be a bevelled phase aimed to generate a smooth surface in the axial direction of the workpiece 20. The longitudinal extension of the flat surface portion could vary as well as its location on the edge surface. The location of the flat surface will depend upon the depth h₁ at which it is desirable to perform metalworking. If material is to be subject of working at a larger depth h₁ the flat surface will have to be located further away from the active corner D since a somewhat larger angle β is a result of the increased degree of turning in relation to the normal N, see Fig. 2. In order to achieve desirable chipworking at sufficient cutting depth the insert is to be provided with chip breaking recesses at a certain distance from the edges 25, 26, 27, said recesses having increased width in direction towards adjacent corners. These recesses are provided with a longitudinal extension such that they extend along the entire main cutting edge and at least half the length of the edge 23 associated with said flat surface 22. There is a planar surface portion 28 between the cutting edge 15 and the recess 25, said portion being oriented perpendicular from the edge surface 13 in order to serve as an edge reinforcement. The above outlined insert appearance with convex edge surfaces will enable a larger abutment surface in the insert pocket and a more stable support due to the insert being urged into its pocket during tensioning of the centre screw 21, the centre line of which is preferably arranged eccentrically in relation to that of the central hole. By using an insert with a rather large radius along the main cutting edge 15 good metalworking capacity and simultaneously reduced sensitivity for vibrations is achieved. A good fixed clamping can be achieved in comparison with a round insert. Since the setting angle varies from a certain angle value down to 0°, thanks to the curved edge, the lifetime of such insert can be-improved during intermittent metalworking. In Fig. 3 there is illustrated how the insert 10 is obliquely oriented in its holder 19 to achieve a suitable clearance angle during working. The insert 10 is arranged such that it is inclined in relation to a horizontal plane extending through axis S at an angle in the range 2-4°. At the same time the insert is tilted forwardly at the same angle **γ**, i.e. it is inclined in a direction that is perpendicular from said first tilting direction. Although the invention is illustrated and described in the shape of an insert with negative basic shape, i.e. a shape in which the edge surfaces 13, 14 and surface 22 are oriented at right angle from the upper chip face 11 and the lower face 12 it is to be understood that the invention is also applicable with positive inserts, i.e. a shape where edge surfaces 13, 14 and surface 22 intersect with the plane of the upper rake face 11 at an acute angle.

## Claims

1. A cutting insert for bar peeling comprising an insert body (10) including an upper rake face (11) and an opposite bottom surface (12) and a clearance edge surface (13, 14) therebetween, said clearance edge surface intersecting said top rake face to form a cutting edge (15, 16) said insert having three separate cutting edges (15, 16, 17) which meet as pairs in the cutting corners, wherein the surface between two corners includes two surface portions (13a, 13b) which are separated by a flat surface portion (22) with straight intersection edges (23, 24) at the intersection line between said flat surface portion (22) and the upper rake face and at the intersection line between the said flat surface portion (22) and the bottom surface (12), **characterized** in that said two surface portions (13a, 13b) between two corners are convexly curved and wherein the chip face (11) of the insert is provided with recesses (25, 26, 27) located at a distance from the cutting edges (15, 16, 17) aimed to act as chip breakers, wherein said recesses (25, 26, 27) each has a longitudinal extension that extends both along the main cutting edges (15, 16, 17) as well as along at least half the length of the upper edge (23) associated with the surface portion (22).

2. Cutting insert as defined in claim 1, **characterized** in that the recesses (25, 26, 27) have increasing width towards the cutting corners.

3. Cutting insert as defined in any of claims 1 - 2, **characterized** in that the surface portion (28) between the cutting edges (15, 16, 17) and the recesses are provided in a plane that extends perpendicularly from the edge surface (13, 14) aimed to serve as edge reinforcements.

4. Tool for bar peeling, comprising a rotary head provided with tool holders (15), each of which is provided with a releasable insert (10) according to claim 1.

5. Tool as defined in claim 4, **characterized** in that the insert (10) is so obliquely inclined in the holder (19) that it appears with an acute inclination angle (γ) of 2 - 4° in relation to a horizontal plane that includes the central axis (S) of the workpiece.

## Patentansprüche

1. Schneideinsatz zum Stabschälen mit einem Einsatzkörper (10), der eine obere Spanfläche 11 und eine entgegengesetzte Bodenoberfläche (12) und dazwischen eine Freikantenoberfläche (13, 14) aufweist, wobei die Freikantenoberfläche die obere Spanfläche schneidet, um eine Schneidkante (15, 16) zu bilden, der Einsatz drei getrennte Schneidkanten (15, 16, 17) hat, die sich paarweise in den Schneidecken treffen, die Oberfläche zwischen zwei Ecken zwei Oberflächenteile (13a, 13b) aufweist, die durch einen flachen Oberflächenteil (22) mit geraden Schneidkanten (23, 24) an der Schnittlinie zwischen dem flachen Oberflächenteil (22) und der oberen Spanfläche und an der Schnittlinie zwischen dem flachen Oberflächenteil (22) und der Bodenoberfläche (12) getrennt sind, **dadurch gekennzeichnet, daß** die zwei Oberflächenteile (13a, 13b) zwischen zwei Ecken konvex gekrümmt sind und wobei die Spanfläche (11) des Einsatzes mit Ausnehmungen (25, 26, 27) versehen ist, die in einem Abstand von den Schneidkanten (15, 16, 17) angeordnet sind, die als Spanbrecher tätig sein sollen, wobei die Ausnehmungen (25, 26, 27) jede eine Längsausdehnung hat, die sich sowohl entlang den Hauptschneidkanten (15, 16, 17) als auch entlang mindestens der halben Länge der oberen Kante (23) erstreckt, welche dem Oberflächenteil (22) zugeordnet ist.

2. Schneideinsatz nach Anspruch 1, **dadurch gekennzeichnet, daß** die Ausnehmungen (25, 26, 27) gegen die Schneidecken hin zunehmende Breite haben.

3. Schneideinsatz nach einem der Ansprüche 1 bis 2, **dadurch gekennzeichnet, daß** der Oberflächenteil (28) zwischen den Schneidkanten (15, 16, 17) und den Ausnehmungen in einer Ebene vorgesehen ist, die sich senkrecht zu der Kantenoberfläche (13, 14) erstreckt, die als Verstärkungskante dienen soll.

4. Werkzeug zum Stabschälen mit einem Drehkopf, der mit Werkzeughaltern (15) versehen ist, von denen jeder mit einem lösbaren Einsatz (10) versehen ist, nach Anspruch 1.

5. Werkzeug nach Anspruch 4, **dadurch gekennzeichnet, daß** der Einsatz (10) in dem Halter (19) so schief geneigt ist, daß er unter einem spitzen Neigungswinkel (γ) von 2 - 4° bezüglich einer horizontalen Ebene erscheint, welche die Mittelachse (S) des Werkstükkes aufweist.

## Revendications

1. Plaquette de coupe pour écroûtage de barre comprenant un corps de plaquette (10) présentant une face de coupe supérieure (11) et une surface inférieure opposée (12) ainsi qu'une surface latérale de dépouille (13, 14) entre celles-ci, ladite surface latérale de dépouille recoupant ladite face de coupe supérieure afin de former une arête tranchante (15, 16), ladite plaquette comportant trois arêtes tranchantes séparées (15, 16, 17) qui se rejoignent sous forme de paires dans les becs de coupe, dans laquelle la surface entre deux becs comprend deux parties de surface (13a, 13b) qui sont séparées par une partie de surface plate (22) présentant des arêtes d'intersection droites (23, 24) au niveau de la ligne d'intersection entre ladite partie de surface plate (22) et la face de coupe supérieure et au niveau de la ligne d'intersection entre ladite partie de surface plate (22) et la surface inférieure (12), caractérisée en ce que lesdites deux parties de surface (13a, 13b) entre deux becs sont incurvées de façon convexe et dans laquelle la face de coupe (11) de la plaquette est munie d'évidements (25, 26, 27) situés à une certaine distance des arêtes tranchantes (15, 16, 17) destinés à agir comme brise-copeaux, dans laquelle lesdits évidements (25, 26, 27) présentent chacun une étendue longitudinale qui s'étend à la fois le long des arêtes tranchantes principales (15, 16, 17) de même que le long d'au moins la moitié de la longueur de l'arête supérieure (23) associée à la partie de surface (22).

2. Plaquette de coupe selon la revendication 1, caractérisée en ce que les évidements (25, 26, 27) présentent une largeur croissante en direction des becs de coupe.

3. Plaquette de coupe selon l'une quelconque des revendications 1 à 2,
caractérisée en ce que les parties de surface (28) entre les arêtes tranchantes (15, 16, 17) et les évidements sont disposées dans un plan qui s'étend de façon perpendiculaire par rapport à la surface latérale (13, 14), afin de servir de renforts d'arêtes.

4. Outil destiné à l'écroûtage de barre, comprenant une tête rotative munie de porte-outils (15), dont chacun est muni d'une plaquette amovible (10) selon la revendication 1.

5. Outil selon la revendication 4, caractérisé en ce que la plaquette (10) est inclinée en oblique dans le porte-outil (19) d'une façon telle qu'elle apparaît avec un angle d'inclinaison aigu (γ) de 2 à 4° par rapport à un plan horizontal qui comprend l'axe central (S) de la pièce d'ouvrage.
